# EUROPEAN PATENT APPLICATION

(11) **EP 4 756 705 A1**
(43) Date of publication of application: **10.06.2026**
(21) Application number: 24864765.3
(22) Date of filing: 14.09.2024
(51) Int. Cl.: G06T 5/50

(54) **IMAGE EDITING METHOD AND APPARATUS, AND DEVICE AND STORAGE MEDIUM**

(30) Priority: 15.09.2023 CN 202311208336
(71) Applicant: Tencent Technology (Shenzhen) Company Limited, Shenzhen, Guangdong 518057 (CN)
(72) Inventor: WANG, Xintao, Shenzhen, Guangdong 518057 (CN); HUANG, Yuzhou, Shenzhen, Guangdong 518057 (CN); SHAN, Ying, Shenzhen, Guangdong 518057 (CN)
(74) Representative: AWA Sweden AB
(86) International application number: PCT/CN2024/118958
(87) International publication number: WO 2025/056050

(57) **Abstract**

The present application relates to the field of artificial intelligence, and provides an image editing method and apparatus, and a device and a storage medium. The method comprises: acquiring an input image and an editing instruction with regard to the input image; extracting from the input image a first image feature which comprises a plurality of feature items; extracting from the editing instruction an instruction text feature comprising a plurality of feature items; fusing a target image feature and the instruction text feature, so as to obtain a fused feature, wherein the fused feature is used for representing a description of executing the editing instruction on the input image, and the target image feature comprises the first image feature; on the basis of the fused feature, determining a first object from the input image and an editing operation with regard to the first object; executing the editing operation on the first object, so as to generate an edited image; and merging the edited image and the input image, so as to obtain a target image.

## Description

### RELATED APPLICATION

This application claims priority to Chinese Patent Application No. 2023112083362, entitled "IMAGE EDITING METHOD AND APPARATUS, DEVICE, AND STORAGE MEDIUM" and filed with the China National Intellectual Property Administration on September 15, 2023.

### FIELD OF THE TECHNOLOGY

This application relates to the field of artificial intelligence (AI), and provides an image editing method and apparatus, a device, and a storage medium.

### BACKGROUND OF THE DISCLOSURE

In recent years, with the rapid development of computer network technology, artificial intelligence (AI) is widely applied in the field of image processing, especially in the increasingly widespread application of AI-based image editing models.

For example, image editing model based on stable diffusion (SD) can provide image editing services. However, text interpretation capability and reasoning capability of a text encoder that comes with SD are week. This makes it difficult for the image editing model to comprehend complex editing instructions, and consequently, edited images conforming to the content of the instruction cannot be generated.

### SUMMARY

Embodiments of this application provide an image editing method and apparatus, a device, and a storage medium.

According to an aspect, an embodiment of this application provides an image editing method, including:
obtaining an input image and an editing instruction for the input image;
extracting, from the input image, a first image feature including a plurality of first feature items;
extracting, from the editing instruction, an instruction text feature;
combining the first image feature with the instruction text feature, to obtain a combined feature indicating to execute the editing instruction on the input image;
determining, according to the combined feature, a first object in the input image and an editing operation corresponding to the editing instruction on the first object;
performing the editing operation corresponding to the editing instruction on the first object, to generate an edited image; and
merging the edited image with the input image, to obtain a merged image.
According to a second aspect, an embodiment of this application further provides an image editing apparatus, including:
a feature extraction unit, configured to obtain an input image and an editing instruction for the input image; extract, from the input image, a first image feature including a plurality of first feature items; and extract, from the editing instruction, an instruction text feature;
a feature mining unit, configured to combine the first image feature with the instruction text feature, to obtain a combined feature indicating to execute the editing instruction on the input image; and
an image editing unit, configured to determine a first object and an editing operation corresponding to the editing instruction on the first object in the input image according to the combined feature; perform the editing operation corresponding to the editing instruction on the first object, to generate an edited image; and merge the edited image with the input image, to obtain a merged image.

According to a third aspect, an embodiment of this application further provides a computer device, including a processor and a memory, the memory having program code stored therein, when executed by the processor, the program code causing the processor to perform operations of any image editing method described above.

According to a fourth aspect, an embodiment of this application further provides a computer-readable storage medium, including program code, when run on the computer device, the program code being configured to cause the computer device to perform operations of any image editing method described above.

According to a fifth aspect, an embodiment of this application further provides a computer program product, including computer instructions, when the computer instructions are executed by a processor, operations of any image editing method described above being implemented.

### BRIEF DESCRIPTION OF THE DRAWINGS

The accompanying drawings described herein are used to provide a further understanding of this application, and form a part of this application. Exemplary embodiments of this application and description thereof are used to explain this application, and do not constitute any inappropriate limitation to this application. In the accompanying drawings:
FIG. 1A is a schematic structural diagram of an image editing model according to an embodiment of this application.
FIG. 1B is an exemplary schematic diagram of an application scenario according to an embodiment of this application.
FIG. 1C is a schematic diagram of comparison of images before and after editing according to an embodiment of this application.
FIG. 2A is a schematic flowchart of training an image editing model according to an embodiment of this application.
FIG. 2B is a schematic logic diagram of training an image editing model according to an embodiment of this application.
FIG. 2C is a schematic logic diagram of a preset target image corresponding to a training sample image for generating and editing functions according to an embodiment of this application.
FIG. 2D is a schematic logic diagram of a preset target image corresponding to a training sample image according to an embodiment of this application.
FIG. 3A is a schematic flowchart of performing an image editing operation on an input image according to an embodiment of this application.
FIG. 3B is a schematic logic diagram of performing an image editing operation on an input image according to an embodiment of this application.
FIG. 3C is a schematic flowchart of obtaining a combined feature according to an embodiment of this application.
FIG. 3D is a schematic logic diagram of obtaining a combined feature according to an embodiment of this application.
FIG. 3E is a schematic flowchart of generating a drawing region according to an embodiment of this application.
FIG. 3F is a schematic logic diagram of generating a drawing region according to an embodiment of this application.
FIG. 3G is a schematic logic diagram of generating a drawing region according to an embodiment of this application.
FIG. 3H is a schematic logic diagram of drawing a blue drink according to an embodiment of this application.
FIG. 3I is a schematic logic diagram of drawing a cat according to an embodiment of this application.
FIG. 3J is a schematic logic diagram of obtaining a merged image in an image merging manner 1 according to an embodiment of this application.
FIG. 3K is a schematic logic diagram of obtaining a merged image in an image merging manner 2 according to an embodiment of this application.
FIG. 3L is a schematic logic diagram of obtaining a merged image in an image merging manner 3 according to an embodiment of this application.
FIG. 4A is a schematic flowchart of performing image editing on a first object according to a second object in a reference image according to an embodiment of this application.
FIG. 4B is a schematic logic diagram of performing image editing on a first object according to a second object in a reference image according to an embodiment of this application.
FIG. 4C is a schematic logic diagram of drawing glasses in a reference image according to an embodiment of this application.
FIG. 5 is a diagram of comparison between editing effects of the related art and this application according to an embodiment of this application.
FIG. 6A shows an image editing model in an application scenario according to an embodiment of this application.
FIG. 6B shows generating a merged image of a girl wearing glasses through an edited image according to an embodiment of this application.
FIG. 6C is a schematic logic diagram of editing an input image to obtain a merged image according to an embodiment of this application.
FIG. 6D is a schematic diagram of an interface for uploading attachments in batches according to an embodiment of this application.
FIG. 6E is a schematic diagram of an interface for uploading to-be-edited packages in batches according to an embodiment of this application.
FIG. 7A shows an image editing model in an application scenario according to an embodiment of this application.
FIG. 7B shows a merged image having a cat in grass replaced with a dog in a reference image according to an embodiment of this application.
FIG. 7C is a schematic logic diagram of editing an input image to obtain a merged image according to an embodiment of this application.
FIG. 8 is a schematic structural diagram of an image editing apparatus according to an embodiment of this application.
FIG. 9 is a schematic diagram of a hardware composition structure of a computer device to which an embodiment of this application is applied.
FIG. 10 is a schematic diagram of a hardware composition structure of another computer device to which an embodiment of this application is applied.

### DESCRIPTION OF EMBODIMENTS

To make the objectives, technical solutions, and advantages of the embodiments of this application clearer, the technical solutions of this application will be clearly and completely described below in conjunction with drawings in the embodiments of this application. It is clear that the described embodiments are merely a part of embodiments in the technical solutions of this application rather than all of the embodiments. Based on the embodiments recorded in this application document, all other embodiments obtained by a person of ordinary skill in the art without making creative efforts shall fall within the protection scope of the technical solutions of this application.

In the following, some terms of the embodiments of the present disclosure including the embodiments of both the claims and the specification (hereinafter referred to as "all embodiments of the present disclosure") are described, so as to help a person skilled in the art have a better understanding.

Large language model (LLM): The LLM is a deep learning model trained using a large amount of text data for unsupervised or semi-supervised learning. The LLM can automatically learn language patterns in the field of natural language processing, to generate a natural language text or understand a meaning of a language text. The LLM can process a variety of natural language tasks such as text classification, question answering, and dialog making, and is an important path to AI.

Stable diffusion (SD): The SD is a text-to-image diffusion model, and can generate high-quality images. Such a model progressively recovers an image from a noisy image under the condition of a given text description. The SD is an open source text-to-image model.

Querying transformer (Q-Former) is a lightweight transformer structure designed for alignment between vision and language. The Q-Former achieves efficient visual feature extraction and language representation learning by introducing a learnable query vector set between a frozen visual model and a large language model. The Q-Former includes two transformer sub-modules: an image transformer and a text transformer. The two sub-modules share a same self-attention layer for efficient computation and information sharing.

Image transformer: The image transformer is responsible for interacting with a frozen image encoder to extract visual features through the learnable query vector set. The query vectors not only interact with themselves, but also interact with an output of the image encoder through a cross-attention layer, so that a visual representation most related to a text is extracted.

Text transformer: The text transformer not only can be used as a text encoder, but also can be used as a text decoder. In a representation learning stage, the text transformer is mainly used as a text encoder and shares the self-attention layer with the image transformer. In a generation learning stage, the text transformer is mainly used as a text decoder, and is responsible for generating a text matching a visual representation.

The following briefly introduces the design ideas of the embodiments of this application.

In all embodiments of the present disclosure, an SD-based image editing model can provide an image editing service. However, a text interpretation capability and a reasoning capability of a text encoder built in the SD-based image editing model are poor. Consequently, the image editing model cannot understand an editing instruction with complex content, and further cannot generate an image conforming to the content of the instruction.

To improve a text comprehension capability and a reasoning capability of the model, the LLM may be introduced to understand content of an editing instruction. The image editing model processes an input image and an editing instruction through the LLM, to obtain a one-dimensional text feature configured to instruct performing an editing operation on the image. The model further calls an image editing plug-in to perform a corresponding operation, to cause the image editing plug-in to perform drawing based on the one-dimensional text feature, to obtain an image.

Although an image editing model in the related art can provide a plurality of image editing functions, all the functions are implemented by different image editing plug-ins. Because underlying frameworks of the image editing plug-ins are not interoperable, the model can only call one of the image editing plug-ins to process a task at a time.

When an input image includes two or more objects of a same type, and an editing instruction instructs performing image editing operations only on some objects of this type, because the image editing model mistakenly identifies all the objects of this type in the image as first objects, and also performs local editing operations on them, there is a discrepancy between a generated image and the editing instruction.

Therefore, to resolve the foregoing problem, this application further provides a novel image editing method. The method includes: obtaining an input image and an editing instruction for the input image; extracting, from the input image, a first image feature comprising a plurality of first feature items; extracting, from the editing instruction, an instruction text feature comprising a plurality of second feature items; combining the first image feature with the instruction text feature, to obtain a combined feature indicating to execute the editing instruction on the input image; determining, according to the combined feature, a first object in the input image and an editing operation corresponding to the editing instruction on the first object; performing the editing operation corresponding to the editing instruction on the first object, to generate an edited image; and merging the edited image with the input image, to obtain a merged image.

In conclusion, in some embodiments of this application, by extracting, from the editing instruction, an instruction text feature including a plurality of second feature items, and combining the first image feature with the instruction text feature, to obtain a combined feature, a capability of interpreting an instruction is improved. In this way, even if an input image includes a plurality of objects of a same type, which objects are first objects and which objects are other objects on which an image editing operation does not need to be performed can be accurately determined, thereby avoiding identifying all objects belonging to this type in the image as first objects, reducing a false detection rate of the objects, and further improving image editing accuracy.

Preferred embodiments of this application are described below with reference to the accompanying drawings of the specification. The preferred embodiments described herein are merely used to describe and explain this application, and but are not intended to limit the present invention. The embodiments in this application and features in the embodiments may be mutually merged in a case that no conflict occurs.

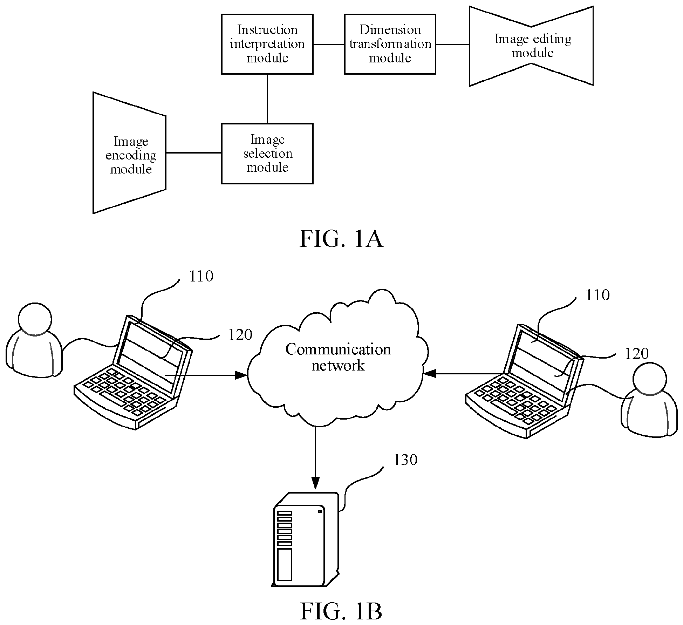

The image editing method provided in the embodiments of this application is implemented through an image editing model. The image editing model is designed by using an end-to-end integrated structure. As shown in FIG. 1A, the image editing model includes an instruction interpretation module and an image editing module.

The instruction interpretation module is configured to interpret content of an editing instruction and fuse an interpreted instruction text feature into an image feature of an input image to obtain a combined feature. The combined feature helps the image editing module determine a first object in the input image and an editing operation for the first object, thereby obtaining a drawing region of the first object in an image region. In this application, the instruction interpretation module may be an LLM or another large language model, which is not limited therein.

The image editing module is configured to draw, in the drawing region of the image region, a second object obtained based on the editing instruction, to obtain an edited image, and use the edited image and the input image, to obtain a merged image (i.e., a target image).

Sometimes, images are too large or include too many elements. To reduce the computational load on the image editing model, an image encoding module and an image selection module are further added. The former is configured to transform an image in a form of pixels into data that the model can identify, and the latter selects a needed input image in response to an image selection instruction.

In addition, to further improve the image editing effect, a dimension transformation module is further added to the model, to transform a spatial dimension of the combined feature into a spatial dimension compatible with the image editing module. In other words, the dimension transformation module is configured to transform the combined feature from a first feature space to a second feature space, wherein the dimensionality of the first feature space is lower than that of the second feature space.

The image editing model can be applied to various application scenarios with image editing needs such as image processing, browsers, and social platforms. When using a related product based on an image editing model, a user enters a natural language-based editing instruction and inputs an input image, to trigger the image editing model to perform an image editing operation combined with an identity preservation function on the input image, and output a corresponding target image. Compared to obscure instructions, natural language-based editing instructions conform to user habits better, lower a learning threshold and use difficulty of using the product, and provide users with a convenient and fast image editing method.

FIG. 1B shows one of the application scenarios. The application scenario includes two terminal devices 110 and one server 130. Communication connections between the terminal devices 110 and the server 130 are established by using a wired network or a wireless network.

Moreover, as a machine learning model, the image editing model may be deployed in a terminal device 110, to provide an image editing function through local calling for users, or may be deployed in a server 130, another independent server in the network, a server cluster in the network, or a distributed system in the network, to provide an image editing function through networked calling for users.

The terminal device 110 includes, but is not limited to, a mobile phone, a computer (such as a tablet computer, a notebook computer, or a desktop computer), an intelligent household appliance, an intelligent voice interaction device (such as a smartwatch or a smart speaker), an in-vehicle terminal, an aircraft, and the like.

The server 130 may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. This is not limited in this application.

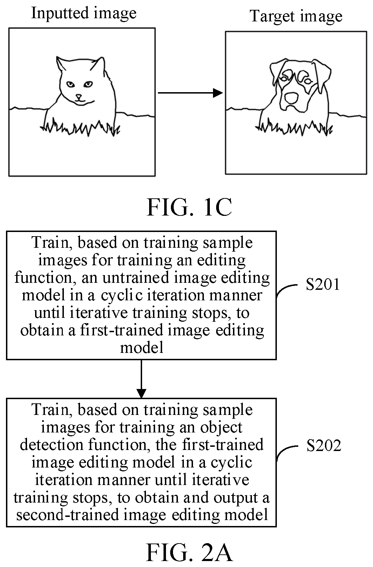

Through an image editing interface 120, the terminal device 110 obtains an editing instruction "Change the cat in the image into a dog" input by a user and an input image, and transmits the foregoing data to the server 130 through a pre-established communication link. The server 130 calls the image editing model, to perform an image editing operation on the input image in response to the editing instruction, to obtain a target image shown in FIG. 1C.

In a model training stage, the image editing model is trained based on training sample images. The editing instruction includes: performing a global editing operation on the image, and performing a local editing operation on the image. Due to powerful interpretation and reasoning capabilities for instructions and input images, knowledge learned from a large amount of data, and a capability of integrating various information, the LLM can generalize different functions and accurately perform image editing on a specified object, thereby saving model training costs.

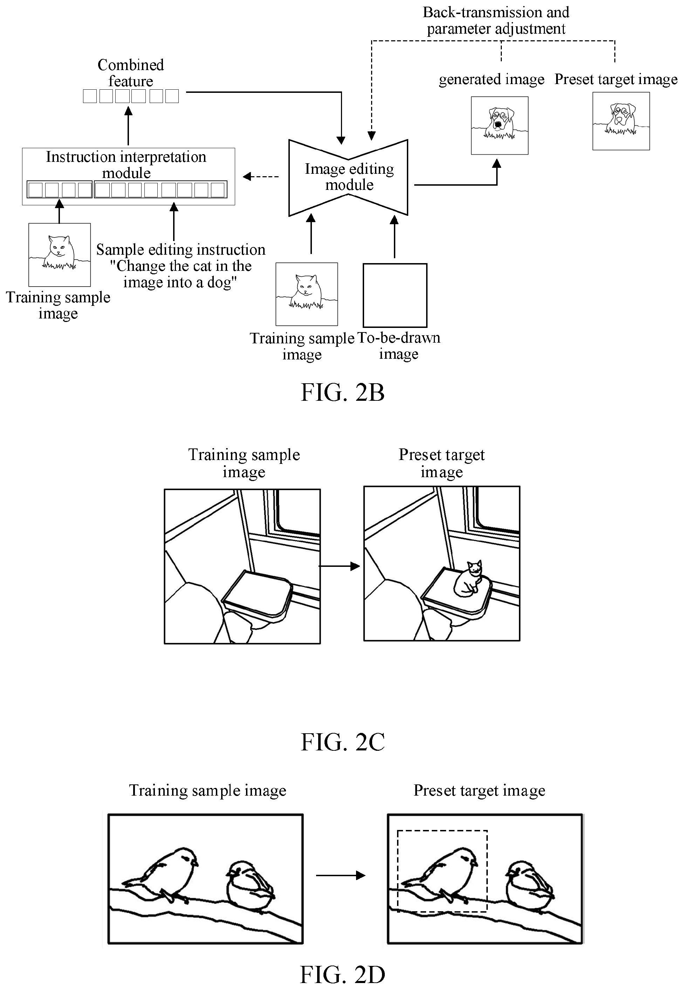

Referring to the schematic diagrams shown in FIG. 2A and FIG. 2B, the image editing model is trained by performing the following operations:
S201: Train, based on training sample images for training an editing function, an untrained image editing model in a cyclic iteration manner until iterative training stops, to obtain a first-trained image editing model.

Before formal training, a preset target image of each training sample needs to be generated in advance. Assuming that an editing instruction is "Add a cat on the chair", a cat is drawn on a training sample image, to obtain a preset target image shown in FIG. 2C.

Each iteration includes:
performing editing operations on corresponding training sample images based on at least one sample editing instruction, to obtain respective target images; and
obtaining respective preset target images of the corresponding training sample images, obtaining, based on the target images and the corresponding preset target images, an image editing loss value generated in this iteration, and sequentially optimizing parameters in modules in the model based on the image editing loss value.

If parameters of the instruction interpretation module and the image editing module in the image editing model are optimized separately, the instruction interpretation module cannot optimize, during parameter adjustment, the parameter adjustment based on rich image supervision signals in the image editing module, and the image editing module cannot optimize, during parameter adjustment, a parameter adjustment effect based on text supervision signals in the instruction interpretation module.

To resolve the problem, a joint optimization manner is adopted in this application. First, parameter adjustment optimization is performed on the image editing module based on the image editing loss value generated in this iteration. The image supervision signal and image editing loss value generated in the image editing module are then transmitted back to the dimension transformation module to optimize the parameters of the dimension transformation module. Then, the image supervision signals, the image editing loss value, and corresponding supervision signals generated by the dimension transformation module are then transmitted back to the instruction interpretation module for parameter adjustment optimization on the instruction interpretation module. This process is repeated until parameter adjustment optimization of the image selection module and image encoding module is completed.

Iteration stopping conditions include: (1) a difference between the image editing loss value generated in this iteration and an image editing loss value generated in a previous iteration does not exceed a preset threshold; (2) the image editing loss value generated in this iteration does not exceed a preset threshold; and (3) a round count in this iteration has reached a preset round count threshold.

When any of the foregoing iteration stopping conditions is met, internal parameters of the model have been stabilized after a plurality of rounds of iterations. Therefore, the model obtained after a round of parameter adjustment that meets the stopping condition is regarded as a first-trained image editing model. If none of the iteration stopping conditions is met, training sample images of a next batch are read to continue training the model.

S202: Train, based on training sample images for training an object detection function, the first-trained image editing model in a cyclic iteration manner until iterative training stops, to obtain and output a second-trained image editing model.

Before formal training, respective preset target images of the training samples need to be generated in advance. Assuming that an editing instruction is "Detect the sparrow on the left side of the image", a detection box is drawn on a training sample image, to obtain a preset target image shown in FIG. 2D.

Each iteration includes:
performing detection operations on corresponding training sample images based on at least one editing instruction, to obtain respective target images; and
obtaining respective preset target images of the corresponding training sample images, obtaining, based on the target images and the corresponding preset target images, a loss value generated in this iteration, and sequentially performing parameter adjustment optimization on functional modules in the model based on the loss value.

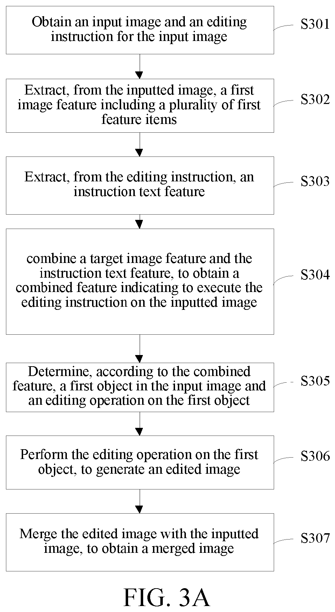

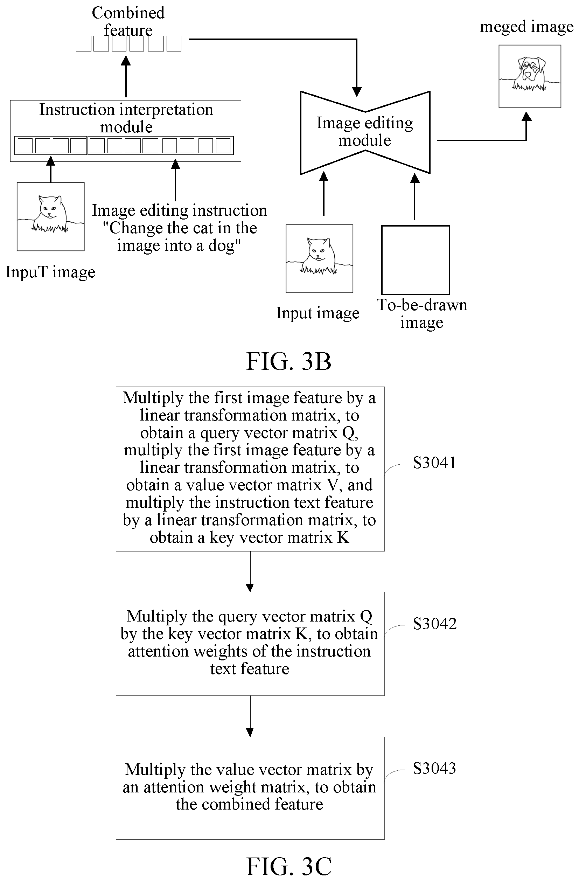

Referring to the schematic diagrams shown in FIG. 3A and FIG. 3B, the merged image (i.e., the target image) is obtained by performing the following operations:
S301: Obtain an input image and an editing instruction for the input image.

S302: Extract, from the input image, a first image feature including a plurality of first feature items. For example, the image encoding model can extract the first image feature representing a visual feature from the input image. Each first feature item corresponds to at least one pixel of the input image. The first image feature is, for example, a feature vector including a plurality of first feature items.

S303: Extract, from the editing instruction, an instruction text feature. The instruction text feature is, for example, a one-dimensional text vector.

The following two manners of obtaining the input image are supported in this application:
Manner 1: Obtain a raw image input by a user, and use the raw image as the input image.

Manner 2: Select the input image from raw images input by a user in response to an image selection instruction.

In the second manner of obtaining the input image, feature extraction is performed on raw images through the image encoding model. Features of the raw images are then input into the image selection module together with the image selection instruction. The features of the raw images are aligned with an instruction text feature of the image selection instruction. Image content corresponding to a raw image feature whose correlation degree with the instruction text feature is high is obtained, to obtain the input image.

Feature extraction is performed on the input image through the instruction interpretation module of the model, to obtain a first image feature, so that the image in a form of pixels is transformed into data that the instruction interpretation module can identify. In addition, feature extraction is performed on the editing instruction by using the instruction interpretation module, to obtain an instruction text feature, and the editing instruction existing in a form of a text or a character string is transformed into data that the model can identify.

S304: combine the first image feature and the instruction text feature, to obtain a combined feature indicating to execute the editing instruction on the input image. In all embodiments of the present disclosure, the combined feature is a joint representation that combines the image visual information of the input image and the textual semantic information of the editing instruction.

In all embodiments of the present disclosure, a first correlation degree between each of the first feature items in the first image feature and the instruction text feature are obtained, and the first image feature and the instruction text feature are combined by using the first correlation degree, to obtain the combined feature. A first correlation degree is, for example, the attention weight of the instruction text feature to a first image feature item.

In all embodiments of the present disclosure, the combined feature may be obtained by using an attention mechanism. For example, from first feature items, a group of feature items whose correlation degree with the instruction text feature exceeds a first preset threshold is selected as the features associated with the instruction text feature. The first preset threshold is a preset value, for example, 0.8. The features associated with the instruction content are combined with the instruction text features to obtain combined image features.

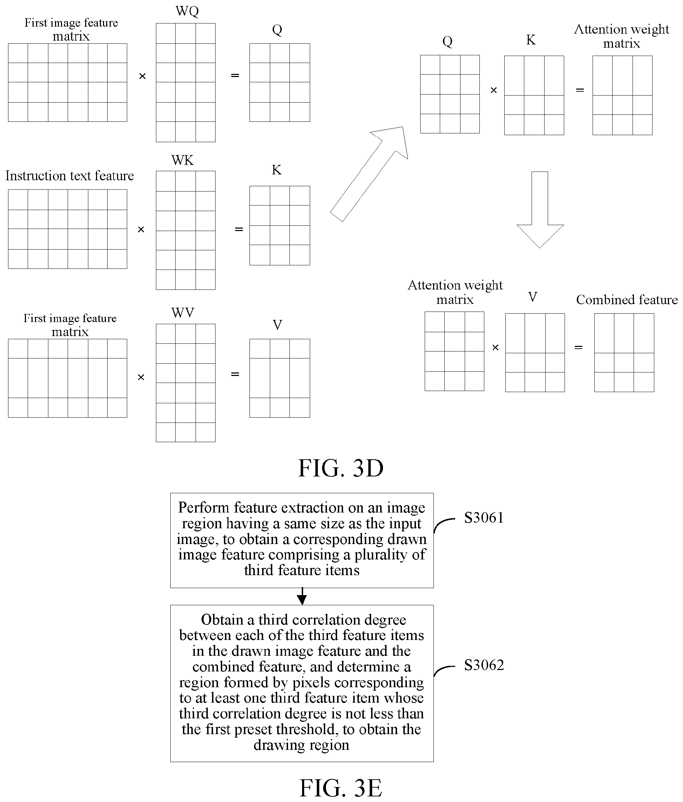

For example, referring to the schematic diagrams shown in FIG. 3C and FIG. 3D, the process of merging the first image feature with the instruction text feature includes:

S3041: Multiply the first image feature by a linear transformation matrix W_Q, to obtain a query vector matrix Q, multiply the first image feature by a linear transformation matrix W_V, to obtain a value vector matrix V, and multiply the instruction text feature by a linear transformation matrix W_K, to obtain a key vector matrix K. The linear transformation matrix W_Q, the linear transformation matrix W_V, and the linear transformation matrix W_K are trainable matrices. In some embodiments of the present disclosure, the linear transformation matrix W_Q, the linear transformation matrix W_V, and the linear transformation matrix W_K are preset.

S3042: Multiply the query vector matrix Q by the key vector matrix K, to obtain an attention weight matrix. The attention weight matrix includes the attention weights of the instruction text feature for first feature items in first image feature. Each attention weight may be represented as a first correlation degree between a respective first feature item in the first image feature and the instruction text feature.

S3043: Multiply the value vector matrix by an attention weight matrix, to obtain the combined feature.

S305: Determine, according to the combined feature, a first object in the input image and an editing operation corresponding to the editing instruction on the first object.

S306: Perform the editing operation corresponding to the editing instruction on the first object, to generate an edited image.

S307: Merge the edited image with the input image, to obtain a merged image.

In conclusion, in the embodiments of this application, by extracting, from the editing instruction, an instruction text feature, and combining the first image feature with the instruction text feature, to obtain a combined feature, a capability of interpreting an instruction is improved. In this way, even if an input image includes a plurality of objects of a same type, which objects are first objects and which objects are other objects on which an image editing operation does not need to be performed can be accurately determined, thereby avoiding identifying all objects belonging to this type in the image as first objects, reducing a false detection rate of the objects, and further improving image editing accuracy.

In all embodiments of the present disclosure, to further improve the image editing effect, a dimension transformation module is further added to the model, to transform the combined feature from a first feature space to a second feature space, wherein the dimensionality of the first feature space is lower than that of the second feature space. A spatial dimension of the transformed combined feature is more compatible with the image editing module.

In all embodiments of the present disclosure, the image editing module obtains, by using an attention mechanism, a second correlation degree between each of the first feature items in the first image feature of the input image and the combined feature, and determines, based on first feature items with high correlation degrees, a first object in the input image and a corresponding editing operation.

In all embodiments of the present disclosure, S305 includes: obtaining for each first feature item in the first image feature, a second correlation degree with the combined feature; determining, from the first image feature, at least one first feature item whose second correlation degree with the combined feature reaches a first preset threshold, to obtain a first feature group; and determining, in the input image, a region formed by pixels corresponding to the first feature group, to determine the first object corresponding to the region. The first preset threshold is a preset value, for example, 0.8. A second correlation degree is, for example, the attention weight of the combined feature to a first image feature item.

In all embodiments of the present disclosure, S306 includes: determining a drawing region corresponding to the first object in an image region having a same size as the input image; changing, when the editing operation is changing an attribute of the first object, the attribute of the first object in the drawing region according to the editing operation, to obtain the edited image; and when the editing operation is replacing the first object with a second object, and no reference image for generating the second object is specified, selecting the second object from a preset object library, and drawing the second object in the drawing region, to obtain the edited image. The preset object library can be an available well-known image library.

In all embodiments of the present disclosure, S306 includes: when the editing operation is an operation of replacing the first object with a second object, and a reference image for generating the second object is specified, determining an image feature of the second object according to the combined feature, and generating an image of the second object in the drawing region corresponding to the first object according to the image feature of the second object, to obtain the edited image.

In all embodiments of the present disclosure, third correlation degrees between each of the third feature items in the drawn image feature of the image region and the combined feature are obtained, and a drawing region corresponding to the first object in an image region having a same size as the input image is obtained based on feature items with high correlation degrees. An implementation of obtaining a third correlation degree between features is similar to the operation shown in S3042 in FIG. 3C. A third correlation degree is, for example, the attention weight of the instruction text feature to a third image feature item.

In all embodiments of the present disclosure, the determining a drawing region corresponding to the first object in an image region having a same size as the input image includes: performing feature extraction on the image region having the same size as the input image, to obtain a drawn image feature including a plurality of third feature items; obtaining a third correlation degree between each of the third feature items in the drawn image feature and the combined feature; and determining a region formed by pixels corresponding to at least one third feature item whose third correlation degree is not less than the first preset threshold, to obtain the drawing region.

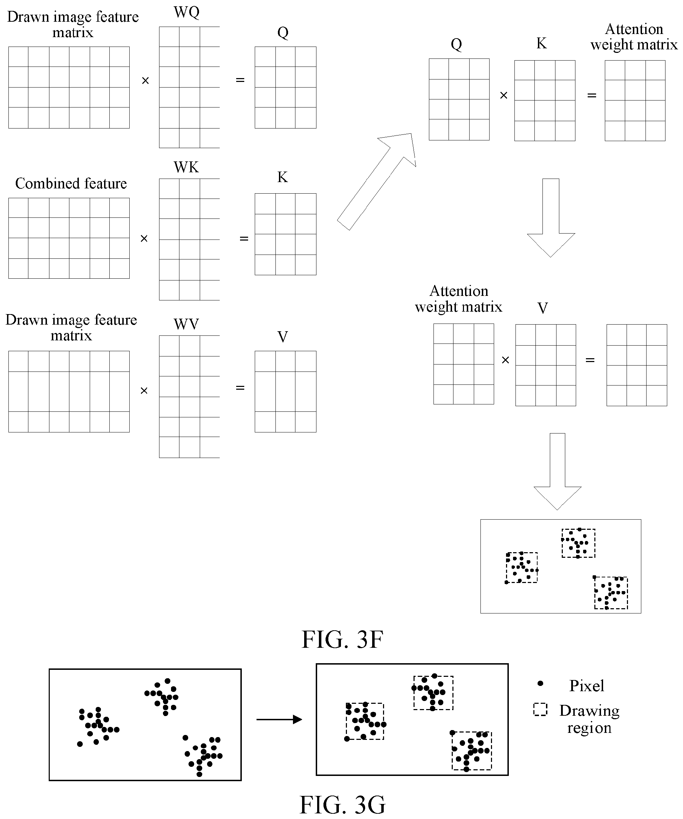

Referring to the schematic diagrams shown in FIG. 3E and FIG. 3F, a specific process of obtaining a drawing region corresponding to the first object includes:
S3061: Perform feature extraction on an image region having a same size as the input image, to obtain a corresponding drawn image feature comprising a plurality of third feature items.

S3062: Obtain a third correlation degree between each of the third feature items in the drawn image feature and the combined feature, and determine a region formed by pixels corresponding to at least one third feature item whose third correlation degree is not less than the first preset threshold, to obtain the drawing region.

A specific implementation process of operation 3062, as shown in FIG. 3G, includes:
first, clustering the at least one third feature item whose correlation degree is not less than the first preset threshold, to obtain at least one drawn image feature group; and
then, for each of the at least one drawn image feature group, performing the following operations:
   obtaining a pixel region corresponding to each of the at least one third feature item in the respective drawn image feature group, each pixel region comprising at least one pixel;
   determining boundary points of the drawing region based on the obtained pixel region; and
   obtaining the drawing region in the image region by connecting the boundary points.

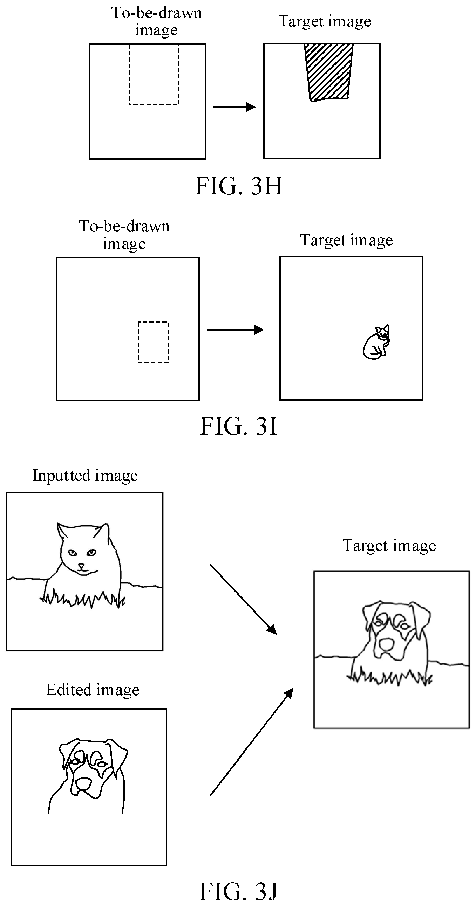

In embodiments of this application, an image region is a noisy image. However, due to limitations in drawing requirements, to clearly present pixels and drawing regions, the image region in FIG. 3B, FIG. 3H, and FIG. 3I is a white background image. The accompanying drawings are merely simple schematic diagrams for illustrating corresponding operations.

If the input image is not input into the image editing module, instead of performing editing based on the input image, the image editing module consequently regenerates a new target image(i.e., a merged image) entirely based on a one-dimensional text features outputted by the LLM, which makes it difficult to maintain consistency between an object other than the first object in the target image and an object other than the first object in the input image in terms of a local structure and a local texture.

To resolve this problem, in this application, the input image, the noisy image region, and the combined feature are input together into the image editing module. The second object obtained based on the editing operation on the first object is drawn into the image region, to obtain the edited image. Then, edited image is then merged with the input image, to obtain the target image. Therefore, unedited other objects in the target image originate from the input image, to keep consistency between images before and after editing in terms of a local structure and a local texture of the image.

In this application, image modification tasks can be further divided into two categories. One is directly editing the first object itself, for example, attribute editing operations such as adjusting a color temperature of an image, adjusting a contrast of an image, and adjusting a color of an object. The other is editing the first object based on pre-constructed object library, for example, adding a cat to an image, putting sunglasses on a person in an image, or changing a painting style of an input image.

The performing the editing operation on the first object, to generate an edited image includes:
changing, when the editing operation is an operation of changing an attribute of the first object, the attribute of the first object in the drawing region according to the editing operation, to obtain the edited image; and
when the editing operation is an operation of replacing the first object with a second object, and no reference image for generating the second object is specified, selecting the second object from a preset object library, and drawing the second object in the drawing region, to obtain the edited image.

In some embodiments, when the editing operation is an operation of replacing the first object with a second object, and a reference image for generating the second object is specified, an image feature of the second object is determined according to the combined feature, and an image of the second object is generated in the drawing region corresponding to the first object according to the image feature of the second object, to obtain the edited image.

In some embodiments, when the editing operation is an operating of changing an attribute of the first object, the editing operation instructs editing the first object itself, so that based on the editing operation, an object obtained after performing the editing operation on the first object is used as a second object, and the second object is drawn in the drawing region of the first object.

In all embodiments of the present disclosure, the editing operation is an operation of replacing the first object with the second object. For example, the editing instruction "Change the cat in the image into a dog" is an editing operation on the first object "cat". In the input image before editing, the first object is "cat". In the image after editing, the object at the original position of the first object is "dog". In another example, the editing instruction is "Change the coffee-colored drink into a blue drink", which is an operation of changing an attribute of the first object "drink". In the images before and after editing, the object at the object position is still "drink".

For example, if the editing instruction is "Change the coffee-colored drink into a blue drink", the corresponding editing operation is to change the color of the first object, "a cup of coffee-colored drink", and the object obtained after the change is "a cup of blue drink." Then, "a cup of blue drink" is drawn as the second object in the corresponding drawing region, so that the edited image shown in FIG. 3H is obtained.

The blue drink is represented by slashes in FIG. 3H, and FIG. 3H is merely a simple schematic diagram for describing the example.

In all embodiments of the present disclosure, when the editing operation is an operation of replacing the first object with a second object, and no reference image for generating the second object is specified, the second object is selected from a preset object library, and the second object is drawn in the drawing region, to obtain the edited image. For example, a second object is obtained based on objects of a same type that are in the preset object library and that are correlated to a type of the second object, and the second object is drawn in the drawing region of the first object.

The process of obtaining a second object based on objects of a same type that are in the preset object library and that are correlated to a type of the second object: obtaining, from the preset object library based on the type of the second object, an object of a same type correlated to the type; and then using any object of the same type as the second object; or obtaining the second object by fusing a plurality of objects of the same type.

For example, the editing instruction is "Add a cat on the chair", and a corresponding editing operation is to add a second object into the input image. Indication information carried by this operation is "cat". A set of objects of the same type as "cat" is obtained from a preset image library. Any cat object in the set is used as the second object. Alternatively, a plurality of cat objects are fused, to obtain one second object. Then, in the drawing region of the image region, the second object "cat" is drawn, to obtain the edited image shown in FIG. 3I.

In the embodiments of this application, the following three image merging manners are provided:
Manner 1: Overlay the edited image on the input image, to obtain the target image.

For example, in response to the editing instruction "Change the cat in the image into a dog", an edited image is drawn. A drawing region in the edited image is an opaque layer, and the remaining region in the image is a transparent layer. When the edited image is directly overlaid on the input image, the second object covers the first object below, but the remaining region of the edited image does not cover the input image, so that other unedited objects in the target image shown in FIG. 3J remain consistent with those in the input image, thereby avoiding anomalies such as image distortion.

Manner 2: Fuse the other unedited objects in the input image into the edited image.

At least one object except the first object are extracted from the input image and the at least one other object is merged with the edited image, to obtain the merged image.

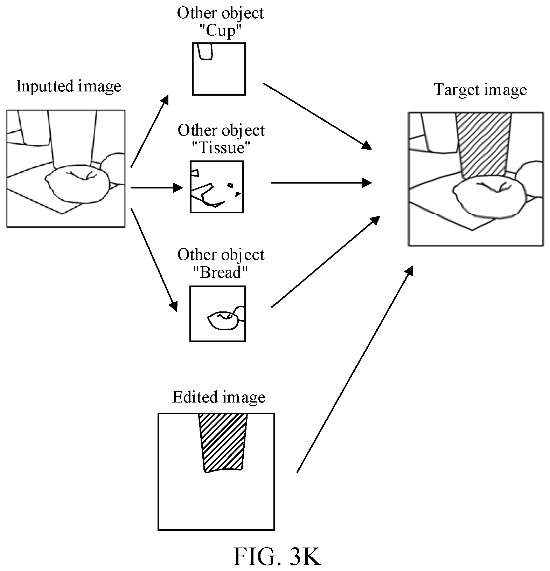

For example, in response to the editing instruction "Change the coffee-colored drink into a blue drink", an edited image is drawn, and then, the input image is decomposed into a plurality of images of other objects, and the plurality of images of other objects are merged with the edited image, to obtain the merged image shown in FIG. 3K.

A coffee-colored drink is shown in the input image, and a blue drink is shown in the target image. However, due to limitations in drawing requirements, in FIG. 3K, the coffee-colored drink is represented by white, and the blue drink is represented by slashes. FIG. 3K is merely a simple schematic diagram for describing the example.

Manner 3: The second object in the edited image is merged with the input image.

The edited image is merged with the input image from which the first object has been removed, to obtain the merged image.

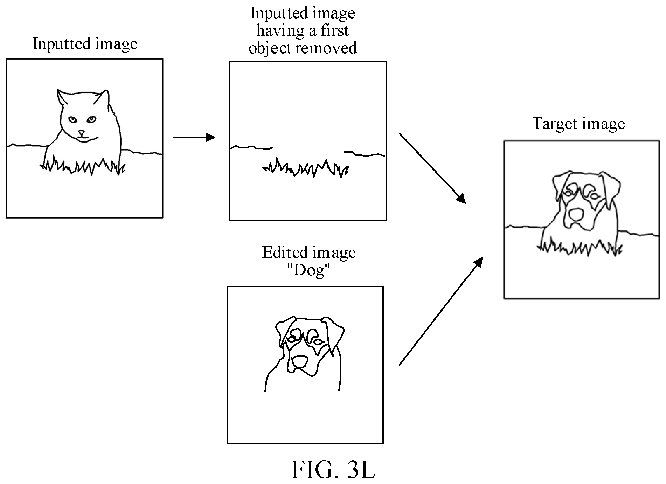

For example, in response to the editing instruction "Change the cat in the image into a dog", an edited image is drawn, and the second object "dog" is extracted from the image, and is fused into the input image having the first object "cat" removed, to obtain the target image shown in FIG. 3L.

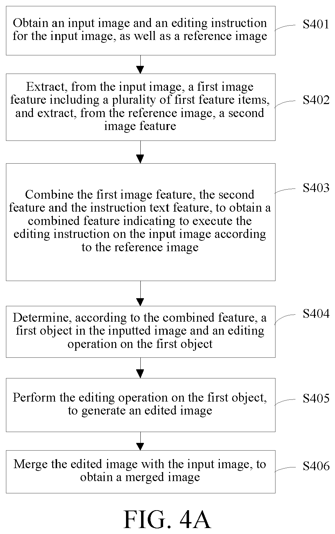

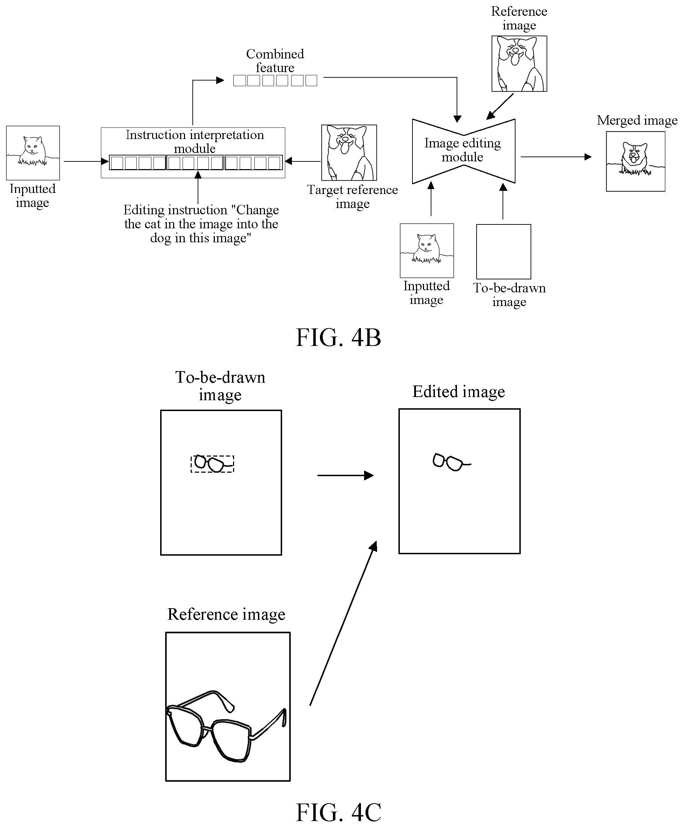

In addition, in this application, image editing may also be performed on the corresponding first object based on a reference image, to obtain the edited second object. Referring to the schematic diagram shown in FIG. 4A and FIG. 4B, a process of modifying the input image into the second object in the reference image includes:
S401: Obtain an input image and an editing instruction for the input image, as well as a reference image.

S402: Extract, from the input image, a first image feature including a plurality of first feature items, and Extract, from the reference image, a second image feature including a plurality of second feature items.

The following two manners of obtaining the reference image are further supported in this application:
Manner 1: Obtain a raw reference image input by a user, and use the raw reference image as the reference image.

Manner 2: Perform image selection on input raw reference images in response to an image selection instruction, to obtain the reference image.

To implement the image selection function, two image encoding modules and two image selection modules are added into the model. An image encoding module 1 and an image selection module 1 are configured to perform image selection on input images input by a user, to obtain the input image. An image encoding module 2 and an image selection module 2 are configured to perform image selection on another raw reference image input by a user, to obtain the reference image.

Then, feature extraction is performed on the input image through the instruction interpretation module of the model, to obtain edited image features, feature extraction is performed on the reference image, to obtain a second image feature, and an image in a form of pixels is transformed into data that the model can identify. In addition, feature extraction is performed on the editing instruction by using the instruction interpretation module, to obtain an instruction text feature, and the editing instruction existing in a form of a text or a character string is transformed into data that the model can identify.

S403: Combine the first image feature, the second image feature and the instruction text feature, to obtain a combined feature indicating to execute the editing instruction on the input image according to the reference image.

In some embodiments, the instruction interpretation module by using the idea of an attention mechanism combines the instruction text feature into image features of the input image and the reference image based on the correlation degrees between the first image feature, the second image feature and the instruction text feature, to obtain a combined feature.

The combined feature helps the image editing module determine a first object in the input image and an editing operation for the first object, obtain a drawing region corresponding to the first object in an image region, and generate a second object according to a feature of a reference image specified by referring the combined feature. In this case, in the embodiments of this application, a second object referring to the reference image can be generated for the input image, to improve accuracy of image editing.

S404: Determine, according to the combined feature, a first object in the input image and an editing operation corresponding to the editing instruction on the first object. Because the combined feature can specify the feature of the reference image, in the embodiments of this application, the editing instruction with the reference image specified can be performed accurately, thereby improving the accuracy of executing a complex editing instruction (for example, an editing instruction with a reference image specified).

S405: Perform the editing operation on the first object, to generate an edited image. In all embodiments of the present disclosure, S405 includes: when the editing operation is an operation of replacing the first object with a second object, and a reference image for generating the second object is specified, determining an image feature of the second object according to the combined feature, and generating an image of the second object in the drawing region corresponding to the first object according to the image feature of the second object, to obtain the edited image. In all embodiments of the present disclosure, S405 includes: determining a drawing region corresponding to the first object in an image region having a same size as the input image; changing, when the editing operation is an operation of changing an attribute of the first object, the attribute of the first object in the drawing region according to the editing operation, to obtain the edited image; and when the editing operation is an operation of replacing the first object with a second object, and no reference image for generating the second object is specified, selecting the second object from a preset object library, and drawing the second object in the drawing region, to obtain the edited image.

S406: Merge the edited image with the input image, to obtain a merged image.

Compared to the related art, the image editing method provided by this application can implement local editing with higher recognition accuracy requirements. In particular, when performing local editing operations on an input image including a plurality of similar objects, the model of the image editing method has better performance than publicly available image editing models in the related art.

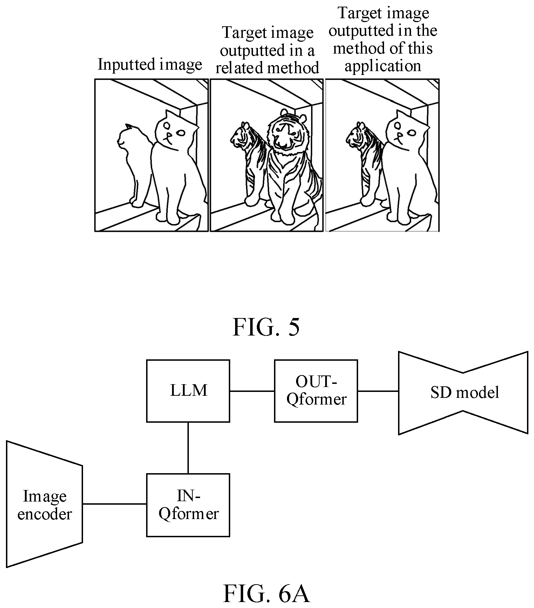

Assuming that the editing instruction is "Change the cat in the mirror into a tiger", the input image in FIG. 5 is edited and drawn by separately using the image editing methods provided by the related art and this application, to obtain two target images shown in FIG. 5. It can be learned from the figure that, in the target image outputted in the related art, two cats in the image are changed into tigers, but in the target image outputted in this application, the background image and the image of the cat in the real world that are in the input image are reserved, and only the cat in the mirror is changed into a tiger.

In the image editing model shown in FIG. 6A, the image encoder is the image encoding module, the IN-QFormer is the image selection module, the LLM is the instruction interpretation module, the OUT-QFormer is the dimension transformation module, and the SD model is the image editing module.

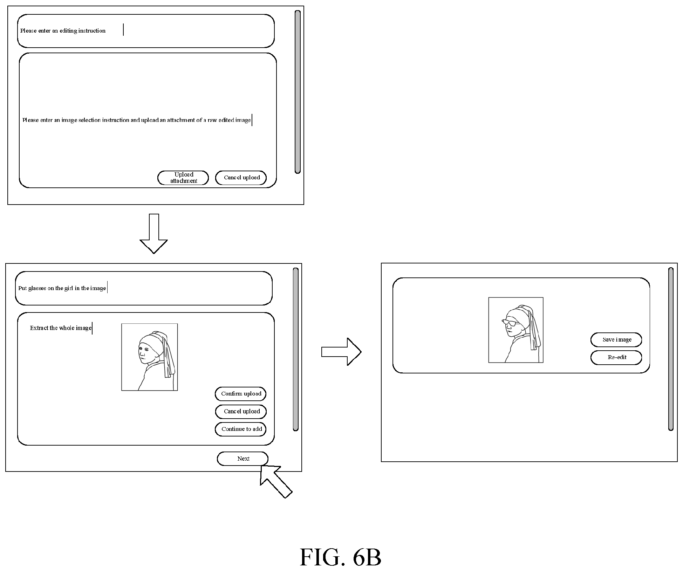

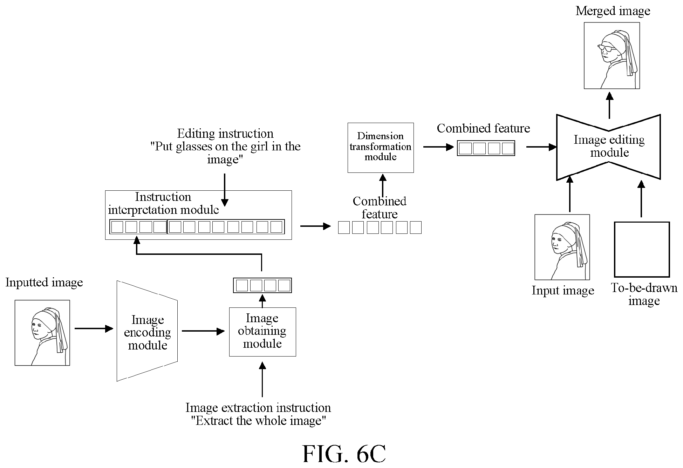

In the image editing interface shown in FIG. 6B, an editing instruction "Put glasses on the girl in the image" and an image selection instruction "Extract the whole image" are entered, then, an attachment of an input image is uploaded, and after the Next button is clicked/tapped, the foregoing data is then input into the image editing model shown in FIG. 6A. As shown in FIG. 6C, after a plurality of operations such as feature extraction and feature combine, a merged image is obtained.

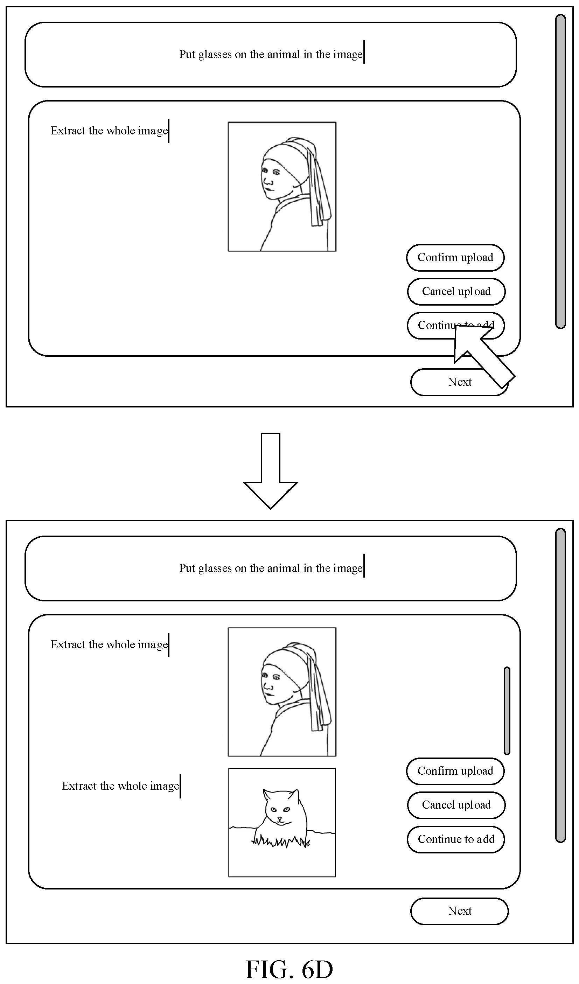

The image editing model also supports batch editing. As shown in FIG. 6D, a user may click/tap the Continue to add button in the image editing interface, to upload attachments of other input images, and the image editing model performs a same image editing operation on the plurality of images.

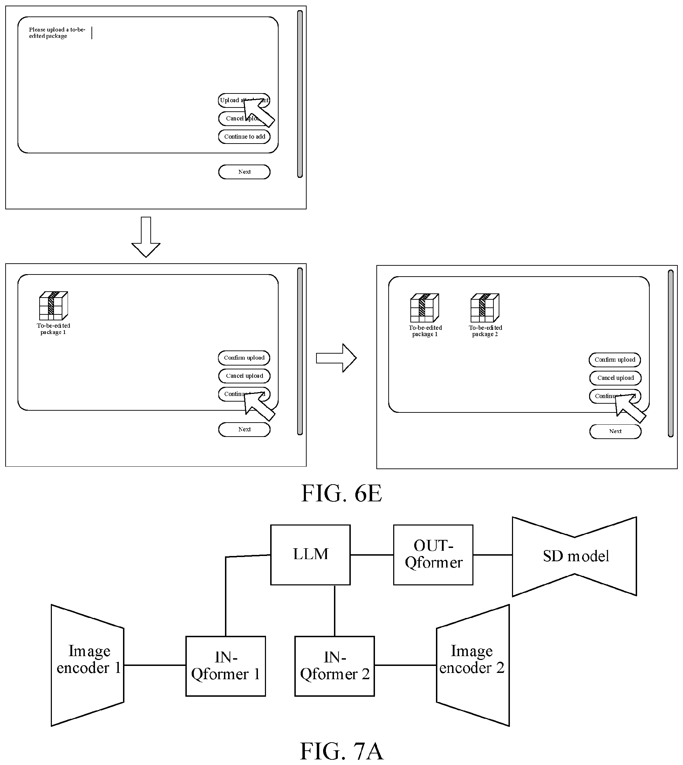

A user may also click/tap the Batch editing button to enter the batch editing interface shown in FIG. 6E, then package a document including an editing instruction and an image selection instruction, as well as with at least one input image together, to create a to-be-edited package, and upload a plurality of to-be-edited packages simultaneously to the image editing model shown in FIG. 6A. When editing instructions written into the to-be-edited packages are different, the image editing module performs different image editing operations on images in the to-be-edited packages, but performs a same image editing operation on images in a same to-be-edited package.

In the image editing model shown in FIG. 7A, the image encoder 1 and the IN-QFormer 1 are configured to process an input image, the image encoder 2 and the IN-QFormer 2 are configured to process a reference image, and the LLM is configured to fuse featured instruction information into an image feature of the input image and an image feature of the reference image, the OUT-QFormer is configured to transform a spatial dimension of the combined feature, and the SD model is configured to perform an image editing operation on the input image.

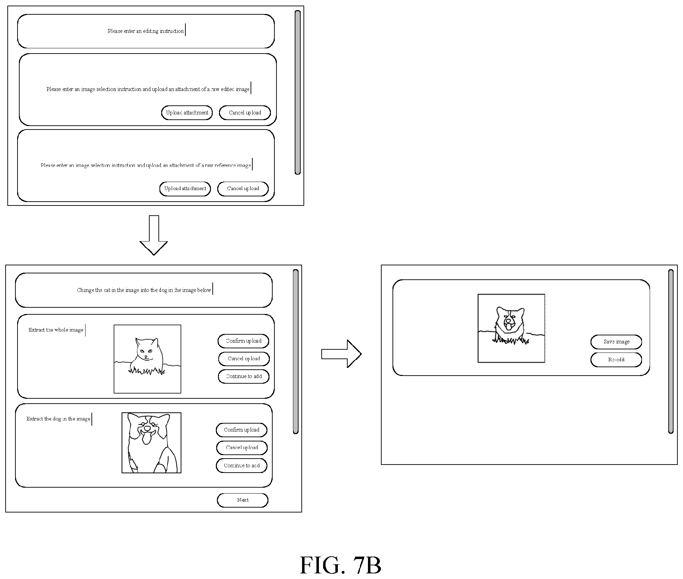

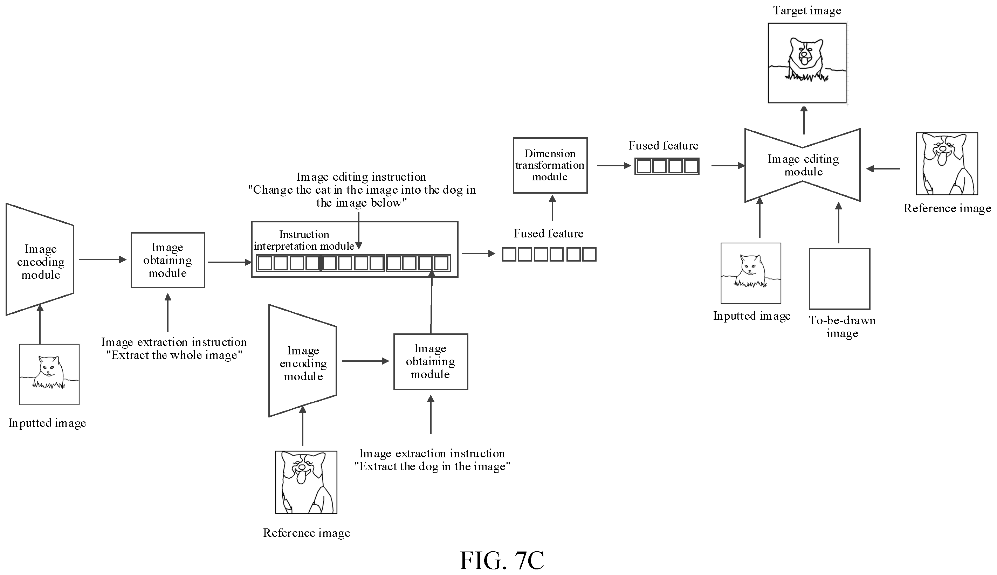

In the image editing interface shown in FIG. 7B, an editing instruction "Change the cat in the image into the dog in the image below" and an image selection instruction "Extract the whole image" are entered, and an attachment of an input image is uploaded, then, an image selection instruction "Extract the dog in the image" is entered, and an attachment of a raw reference image is uploaded, and after the Next button is clicked/tapped, the foregoing data is then input into the image editing model shown in FIG. 7A. As shown in FIG. 7C, after a plurality of operations such as feature extraction and feature fusion, a target image is obtained.

Similarly, the image editing model shown in FIG. 7A also supports batch editing. For a specific implementation, reference may be made to relevant content of FIG. 6C and FIG. 6D. Details are not described herein again.

In addition, in the specific implementations of this application, object data related to obtaining an input image, obtaining a raw reference image, and the like is involved. When the above embodiments of this application are applied to a specific product or technology, a permission or consent of an object is required, and collection, use, and processing of the relevant data need to comply with relevant laws, regulations, and standards of relevant countries and regions.

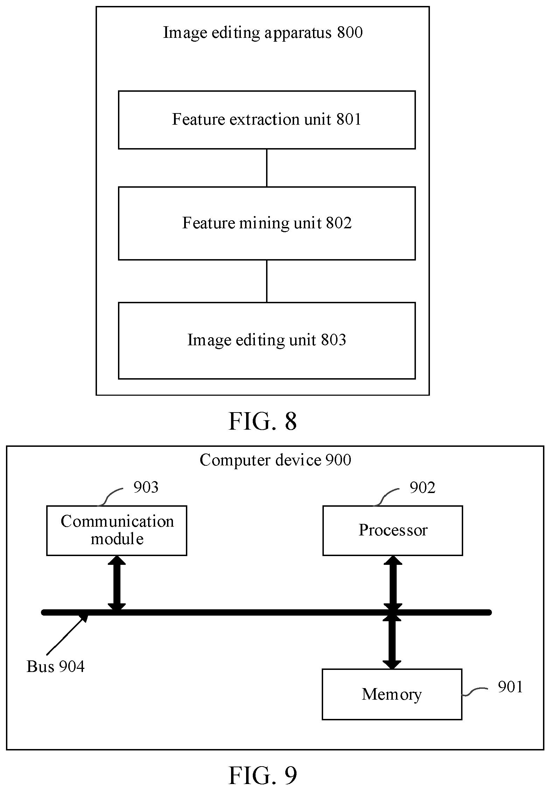

Based on the same inventive concept as the foregoing method embodiments, the embodiments of this application further provide an image editing apparatus. As shown in FIG. 8, an image editing apparatus 800 may include:
a feature extraction unit 801, configured to obtain an input image and an editing instruction for the input image; extract, from the input image, a first image feature comprising a plurality of first feature items; and extract, from the editing instruction, an instruction text features;
a feature mining unit 802, configured to combine the first image feature and the instruction text feature, to obtain a combined feature indicating to execute the editing instruction on the input image; and
an image editing unit 803, configured to determine a first object and an editing operation corresponding to the editing instruction on the first object in the input image according to the combined feature; perform the editing operation corresponding to the editing instruction on the first object, to generate an edited image; and merge the edited image with the input image, to obtain a merged image.

For ease of description, the foregoing parts are divided into modules (or units) based on functions for respective description. Certainly, in implementation of this application, the functions of the modules (units) may be implemented in the same piece of or a plurality of pieces of software and/or hardware.

After the image editing method and apparatus according to exemplary implementations of this application are described, next, a computer device according to another exemplary implementation of this application is described.

A person skilled in the art can understand that various aspects of this application may be implemented as systems, methods, or computer program products. Therefore, each aspect of this application may be specifically implemented in the following forms, that is, the implementation of complete hardware, complete software (including firmware and micro code), or a combination of hardware and software, which may be uniformly referred to as "circuit", "module", or "system" herein.

Based on the same inventive concept of the above method embodiment, an embodiment of this application further provides a computer device. In an embodiment, the computer device may be a server, a server 130 shown in FIG. 1B. In the embodiment, the structure of the computer device 900 is shown in FIG. 9 and may at least include a memory 901, a communication module 903 and at least one processor 902.

The memory 901 is configured to store a computer program executed by the processor 902. The memory 901 may mainly include a program storage area and a data storage area, where the program storage area may store an operating system and a program to run an instant messaging function and the like; and the data storage area may store various instant messaging information, an operation instruction set, and the like.

The memory 901 may be a volatile memory such as a random-access memory (RAM). The memory 901 may also be a non-volatile memory, for example, a read-only memory, a flash memory, a hard disk drive (HDD) or a solid-state drive (SSD); or the memory 901 is any other medium capable of being configured to carry or store an expected computer program having an instruction or data structural form and being accessed by the computer, which is not limited herein. The memory 901 may be a combination of the foregoing memories.

The processor 902 may include one or more central processing units (CPUs) or digital processing units. The processor 902 is configured to implement the image editing method when calling the computer program stored in the memory 901.

The communication module 903 is configured to communicate with the terminal device or other servers.

Specific connecting media among the foregoing memory 901, communication module 903 and processor 902 are not limited in the embodiment of this application. In the embodiment of this application, in FIG. 9, the memory 901 and the processor 902 are connected through a bus 904. The bus 904 is described by a thick line in FIG. 9. The connecting modes among other components are schematically illustrated only, which are not limited herein. The bus 904 may be classified into an address bus, a data bus, a control bus, and the like. For ease of description, the bus is only described by a thick line in FIG. 9, but only a bus or a type of bus is not described.

The memory 901 has a computer storage medium stored therein. The computer storage medium has computer-executable instructions stored therein. The computer-executable instructions are configured for implementing the image editing method provided in the embodiments of this application. The processor 902 is configured to perform the image editing method, as shown in FIG. 3A.

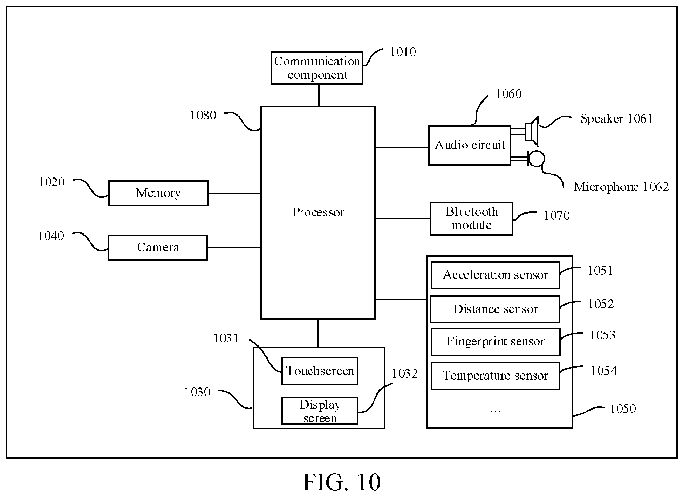

In another embodiment, the computer device may also be another computer device, the terminal device 110 shown in FIG. 1B. In this embodiment, a structure of the computer device may be shown in FIG. 10, including components such as a communication component 1010, a memory 1020, a display unit 1030, a camera 1040, a sensor 1050, an audio circuit 1060, a Bluetooth module 1070, and a processor 1080.

The communication module 1010 is configured to communicate with a server. In all embodiments of the present disclosure, the structure of the electronic device may include a circuit wireless fidelity (Wi-Fi) module, the Wi-Fi module is a short distance wireless transmission technology, and the electronic device may help an object to transmit and receive information through the Wi-Fi module.

The memory 1020 may be configured to store a software program and data. The process 1080 runs the software program or data stored in the memory 1020, to implement various functions of the terminal device 110 and data processing. The memory 1020 may include a high-speed random access memory, and may alternatively include a non-volatile memory, for example, at least one magnetic disk storage device, a flash memory device, or another non-volatile solid-state storage device. The memory 1020 stores an operating system causing the terminal device 110 to run. In this application, the memory 1020 may store an operating system and various application programs, and may further store a computer program configured for performing the image editing method provided in the embodiments of this application.

The display unit 1030 may be further configured to display information input by the object or information provided to the object and graphical user interfaces (GUI) of various menus of the terminal device 110. Specifically, the display unit 1030 may include a display screen 1032 arranged on a front surface of the terminal device 110. The display screen 1032 may be configured in the form of a liquid crystal display (LCD) and an organic light-emitting diode (OLED), and the like. The display unit 1030 may be configured to display an image editing interface and the like in the embodiments of this application.

The display unit 1030 may further be configured to receive input digit or character information and generate a signal input associated with object settings and function control of the terminal device 110. The display unit 1030 may include a touchscreen 1031 arranged on the front surface of the terminal device 110, and the touchscreen may collect touch operations on or near the object, for example, a click button and a dragging scroll box.

The touchscreen 1031 may be overlaid on the display screen 1032, or the touchscreen 1031 and the display screen 1032 may be integrated to implement input and output functions of the terminal device 110, and may be referred to as a touch display screen after the integration. The display unit 1030 in this application may display the application program and corresponding operating operations.

The camera 1040 may be configured to capture a static image, and the object may issue the image photographed by the camera 1040 through the application. There may be one or more cameras 1040. An optical image of an object is generated through the lens, and is projected onto the photosensitive element. The photosensitive element may be a charge coupled device (CCD) or a complementary metal-oxide-semiconductor (CMOS) phototransistor. The photosensitive element transforms an optical signal into an electrical signal, and then transmits the electrical signal to the processor 1080 for transforming the electrical signal into a digital image signal.

The terminal device may further include at least one sensor 1050 such as an acceleration sensor 1051, a distance sensor 1052, a fingerprint sensor 1053, and a temperature sensor 1054. The terminal device may also be equipped with other sensors such as a gyroscope, a barometer, a hygrometer, a thermometer, an infrared sensor, a light sensor, and a motion sensor.

The audio-frequency circuit 1060, a speaker 1061, and a microphone 1062 may provide audio interfaces between a user and the terminal device 110. The audio circuit 1060 may transform received audio data into an electric signal and transmit the electric signal to the speaker 1061. The speaker 1061 transforms the electric signal into a sound signal and outputs the sound signal. The terminal device 110 may further be configured with a volume button, configured to adjust a volume of the sound signal. According to another aspect, the microphone 1062 transforms a collected sound signal into an electrical signal. After receiving the electrical signal, the audio circuit 1060 transforms the electrical signal into audio data, and then outputs the audio data to, for example, another terminal device 110 through the communication component 1010, or outputs the audio data to the memory 1020 for further processing.

The Bluetooth module 1070 is configured to perform information interaction with other Bluetooth devices having Bluetooth modules through a Bluetooth protocol. For example, the terminal device may establish, through the Bluetooth module 1070, a Bluetooth connection with a wearable electronic device (for example, a smartwatch) also equipped with a Bluetooth module, to perform data interaction.

The processor 1080 is a control center of the terminal device and configured to connect all parts of the entire terminal by using various interfaces and lines, and executes various functions of the terminal device and processes data by running or executing the software program stored in the memory 1020 and calling data stored in the memory 1020. In all embodiments of the present disclosure, the processor 1080 may include one or more processing units; an application processor and a baseband processor may be integrated into the processor 1080. The application processor mainly processes an operating system, a user interface, an application, and the like, and the baseband processor mainly processes wireless communication. The above baseband processor may either not be integrated into the processor 1080. In the present application, the processor 1080 may run the operating system, the application program, the user interface display, a touch response, and the image editing method in the embodiments of the present application. In addition, the processor 1080 is coupled with the display unit 1030.

In some possible implementations, aspects of the image editing method provided in this application may further be realized in the form of a program product, which includes a computer program. When the program product runs on the computer device, the computer program is configured to cause the computer device to execute operations in the image editing method according to various exemplary implementations of this application described above in this specification, for example, the computer device may execute operations shown in FIG. 3A.

The program product may be any combination of one or more readable media. The readable medium may be a readable signal medium or a readable storage medium. The readable storage medium may be, for example, but not limited to, an electric, magnetic, optical, electromagnetic, infrared, or semi-conductive system, apparatus, or device, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

The program product in the implementations of this application may use a portable compact disc read-only memory (CD-ROM), include the computer program, and may be run on the electronic device. However, the program product of this application is not limited thereto. In this specification, the readable storage medium may be any tangible medium that includes or stores the program. The program may be used by or in combination with a command execution system, apparatus, or device.

The readable signal medium may include a data signal propagated in a baseband or as a part of a carrier, and carries the readable computer program. A data signal propagated in such a way may assume a plurality of forms, including, but not limited to, an electromagnetic signal, an optical signal, or any appropriate combination thereof. The readable signal medium may alternatively be any readable medium other than the readable storage medium. The readable medium may send, propagate, or transmit a program used by or in combination with a command execution system, apparatus, or device.

The computer program included in the readable medium may be transmitted by using any suitable medium, including but not limited to a wireless medium, a wired medium, an optical cable, an RF, or the like, or any suitable combination thereof.

The program code for executing the operations of this application may be written by using any combination of one or more programming languages. The programming languages include an object-oriented programming language such as Java and C++, and also include a conventional procedural programming language such as "C" or similar programming languages. The program code may be completely executed on a user computer device, partially executed on the user computer device, executed as an independent software package, partially executed on a user computer device and partially executed on a remote computer device, or completely executed on a remote computer device. In cases involving a remote computer device, the remote computer device may be connected to a user computer device through any type of network including a local area network (LAN) or a wide area network (WAN), or may be connected to an external computer device (for example, through the Internet by using an Internet service provider).

Although several units or subunits of the apparatus are mentioned in detailed description above, such division is merely an example but not mandatory. In fact, according to the implementations of this application, features and functions of two or more units described above may be specified in one unit. On the contrary, the features and functions of one unit described above may be further divided to be embodied by a plurality of units.

In addition, although the operations of the method in this application are described in a specific order in the accompanying drawings, this does not require or imply that the operations are bound to be executed in the specific order, or all the operations shown are bound to be executed to achieve the expected result. Additionally or alternatively, some operations may be omitted, and a plurality of operations are combined into one operation to be performed, and/or one operation is divided into a plurality of operations to be performed.

Embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, and an optical memory) that include a computer-usable computer program.

This application is described with reference to the flowcharts and/or block diagrams of the method, the device (system), and the computer program product according to embodiments of this application. Computer program instructions may be for implementing each process and/or each block in the flowcharts and/or the block diagrams and a combination of a process and/or a block in the flowcharts and/or the block diagrams. These computer program commands may be provided for a general-purpose computer, a dedicated computer, an embedded processor, or a processor of any other programmable data processing device to generate a machine, so that the commands executed by a computer or a processor of any other programmable data processing device generate an apparatus for implementing a specific function in one or more processes in the flowcharts and/or in one or more blocks in the block diagrams.

## Claims

1. An image editing method, executable by a computer device, the method comprising:
obtaining an input image and an editing instruction for the input image;
extracting, from the input image, a first image feature comprising a plurality of first feature items;
extracting, from the editing instruction, an instruction text feature;
combining the first image feature with the instruction text feature, to obtain a combined feature indicating to execute the editing instruction on the input image;
determining, according to the combined feature, a first object in the input image and an editing operation corresponding to the editing instruction on the first object;
performing the editing operation corresponding to the editing instruction on the first object, to generate an edited image; and
merging the edited image with the input image, to obtain a merged image.

2. The method according to claim 1, wherein the combining the first image feature with the instruction text feature, to obtain a combined feature, comprises:
obtaining a first correlation degree between each of the first feature items in the first image feature and the instruction text feature; and
combining the first image feature with the instruction text feature by using the first correlation degree, to obtain the combined feature.

3. The method according to claim 1 or 2, wherein when the editing instruction specifies a reference image, the method further comprises:
obtaining the reference image; and
extracting, from the reference image, a second image feature comprising a plurality of second feature items,
the combining the first image feature with the instruction text feature, to obtain a combined feature indicating to execute the editing instruction on the input image comprises: combining the first image feature and the second image feature with the instruction text feature, to obtain the combined feature indicating to execute the editing instruction on the input image according to the reference image.

4. The method according to claim 2, wherein the determining, according to the combined feature, a first object in the input image and an editing operation corresponding to the editing instruction on the first object comprises:
obtaining for each first feature item in the first image feature, a second correlation degree with the combined feature;
determining, from the first image feature, at least one first feature item whose second correlation degree with the combined feature reaches a first preset threshold, to obtain a first feature group; and
determining, in the input image, a region formed by pixels corresponding to the first feature group, to obtain the first object corresponding to the region.

5. The method according to any one of claims 1 to 4, wherein the performing the editing operation corresponding to the editing instruction on the first object, to generate an edited image, comprises:
determining a drawing region corresponding to the first object in an image region having a same size as the input image;
changing, when the editing operation is changing an attribute of the first object, the attribute of the first object in the drawing region according to the editing operation, to obtain the edited image; and
when the editing operation is replacing the first object with a second object, and no reference image for generating the second object is specified, selecting the second object from a preset object library, and drawing the second object in the drawing region, to obtain the edited image.

6. The method according to any one of claims 2 to 5, wherein the performing the editing operation corresponding to the editing instruction on the first object, to generate an edited image, comprises: when the editing operation corresponding to the editing instruction is replacing the first object with a second object, and a reference image for generating the second object is specified, determining an image feature of the second object according to the combined feature; and
generating an image of the second object in a drawing region corresponding to the first object according to the image feature of the second object, to obtain the edited image.

7. The method according to claim 5, wherein the determining a drawing region corresponding to the first object in an image region having a same size as the input image comprises:
performing feature extraction on the image region having the same size as the input image, to obtain a drawn image feature comprising a plurality of third feature items;
obtaining a third correlation degree between each of the third feature items in the drawn image feature and the combined feature; and
determining a region formed by pixels corresponding to at least one third feature item whose third correlation degree is not less than the first preset threshold, to obtain the drawing region.

8. The method according to claim 7, wherein the determining a region formed by pixels corresponding to at least one third feature item whose third correlation degree is not less than the first preset threshold, to obtain the drawing region, comprises:
clustering the at least one third feature item whose correlation degree is not less than the first preset threshold, to obtain at least one drawn image feature group; and
for each of the at least one drawn image feature group, performing the following operations:
obtaining a pixel region corresponding to each of the at least one third feature item in the respective drawn image feature group, each pixel region comprising at least one pixel;
determining boundary points of the drawing region based on the obtained pixel region; and
obtaining the drawing region in the image region by connecting the boundary points.

9. The method according to any one of claims 1 to 8, wherein the merging the edited image with the input image, to obtain a merged image, comprises:
overlaying the edited image on the input image, to obtain the merged image; or
extracting at least one object except the first object from the input image; and merging the at least one object with the edited image, to obtain the merged image; or
merging the edited image with the input image from which the first object has been removed, to obtain the merged image.

10. The method according to any one of claims 1 to 9, wherein the obtaining the input image comprises:
obtaining a raw image, and using the raw image as the input image; or
selecting the input image from raw images in response to an image selection instruction.

11. The method according to claim 2, further comprising:
transforming the combined feature from a first feature space to a second feature space, wherein the dimensionality of the first feature space is lower than that of the second feature space.

12. An image editing apparatus, comprising:
a feature extraction unit, configured to obtain an input image and an editing instruction for the input image; extract, from the input image, a first image feature comprising a plurality of first feature items; and extract, from the editing instruction, an instruction text feature;
a feature mining unit, configured to combine the first image feature and the instruction text feature, to obtain a combined feature indicating to execute the editing instruction on the input image; and
an image editing unit, configured to determine a first object and an editing operation corresponding to the editing instruction on the first object in the input image according to the combined feature; perform the editing operation corresponding to the editing instruction on the first object, to generate an edited image; and merge the edited image with the input image, to obtain a merged image.

13. A computer device, comprising a processor and a memory, the memory having program code stored therein, when executed by the processor, the program code causing the processor to perform operations of the method according to any one of claims 1 to 11.

14. A computer-readable storage medium, comprising program code, when run on a computer device, the program code being configured to cause the computer device to perform operations of the method according to any one of claims 1 to 11.

15. A computer program product, comprising computer instructions, when the computer instructions are executed by a processor, operations of the method according to any one of claims 1 to 11 being implemented.
